# DEMANDE DE BREVET EUROPEEN

(11) **EP 0 801 240 A1**
(43) Date de publication de la demande: **15.10.1997**
(21) Numéro de dépôt: 97400517.5
(22) Date de dépôt: 06.03.1997
(51) Int. Cl.: F16D 3/06, B61C 9/00

(54) **Ensemble de transmission à mobilité axiale**

(30) Priorité: 12.04.1996 FR 9604618
(71) Demandeur: GKN Automotive AG, D-53797 Lohmar (DE)
(72) Inventeur: Brossard, Jean-Claude, 78250 Meulan (FR)
(74) Mandataire: Jacobson, Claude

(57) **Abrégé**

L'ensemble de transmission à mobilité axiale comporte un arbre de transmission (10), reçu mobile à coulissement dans un fourreau (12) muni d'un palier (14) de guidage en translation de l'arbre (10). Le palier (14) est fixe axialement par rapport au fourreau (12) et est monté mobile en rotation par rapport à celui-ci par l'intermédiaire d'un roulement (16). L'arbre (10) et le fourreau (12) sont munis de moyens (18) d'accouplement en rotation à mobilité axiale. L'arbre (10) ou le fourreau (12) comporte des moyens (20) de libération des moyens d'accouplement en rotation, de sorte que, après libération des moyens d'accouplement (18), l'arbre (10) est libre en rotation par rapport au fourreau (12). L'arbre (10) et le palier (14) comportent des moyens (34, 58 ; 34A, 58) complémentaires de solidarisation en rotation l'un à l'autre.

Application aux transmissions de véhicules moteurs de trains à grande vitesse.

## Description

La présente invention concerne un ensemble de transmission à mobilité axiale, du type comportant un arbre de transmission généralement de révolution, reçu mobile à coulissement à l'intérieur d'un fourreau muni d'un palier de guidage en translation de l'arbre, lequel palier est fixé axialement par rapport au fourreau et est monté mobile en rotation par rapport à celui-ci par l'intermédiaire d'un roulement, l'arbre et le fourreau étant munis de moyens d'accouplement en rotation à mobilité axiale dans le prolongement du palier, l'arbre ou le fourreau comportant en outre des moyens de libération des moyens d'accouplement en rotation, de sorte que, après libération des moyens d'accouplement, l'arbre est libre en rotation par rapport au fourreau.

De tels ensembles de transmission sont mis en oeuvre notamment dans une chaîne de transmission reliant un moteur de propulsion à une roue motrice d'un véhicule ferroviaire.

La mobilité axiale de l'ensemble de transmission permet de compenser le débattement de la suspension du véhicule.

Dans ces ensembles de transmission, les moyens d'accouplement en rotation sont libérés, par exemple, lors d'un blocage du moteur de propulsion, de sorte que la roue motrice du véhicule peut tourner librement malgré le blocage du moteur. Ceci permet de ne pas stopper le véhicule.

On constate après la libération des moyens d'accouplement que l'arbre, qui est par exemple relié au moteur, présente une vitesse angulaire nulle, alors que le fourreau, relié à la roue, présente une vitesse angulaire non nulle proportionnelle à celle de la roue.

Dans ces conditions, un mouvement de rotation relatif s'établit d'une part au niveau du roulement entre le palier de guidage en translation de l'arbre et le fourreau, et d'autre part également entre l'arbre et le palier lui-même. Le mouvement de rotation de l'arbre par rapport au palier provoque un échauffement important dû aux frottements. Cet échauffement est nuisible au bon fonctionnement du palier et du roulement voisins. En particulier, l'arbre et le palier risquent de se gripper et de se bloquer, supprimant ainsi la mobilité axiale de l'ensemble de transmission.

L'invention a pour but de proposer un ensemble de transmission à mobilité axiale, ne présentant pas les inconvénients mentionnés ci-dessus.

A cet effet, l'invention a pour objet un ensemble de transmission à mobilité axiale, du type précité, caractérisé en ce que l'arbre et le palier comportent des moyens de solidarisation en rotation l'un à l'autre.

Suivant des modes particuliers de réalisation, l'invention peut comporter l'une ou plusieurs des caractéristiques suivantes :
- les moyens de solidarisation en rotation comportent au moins un méplat ménagé sur la paroi latérale de l'arbre et le palier comporte une ou plusieurs saillies coopérant avec le ou chaque méplat pour assurer la solidarisation en rotation de l'arbre avec le palier ;
- le ou chaque méplat a sensiblement une forme d'hélice, de sorte qu'il forme une surface de came pour la ou chaque saillie, provoquant ainsi un déplacement angulaire au niveau du roulement entre le palier et le fourreau lors d'un déplacement axial de l'arbre par rapport au fourreau ;
- les moyens d'accouplement en rotation comportent un tripode fixé à l'extrémité de l'arbre et reçu dans le fourreau, des rainures longitudinales complémentaires adaptées pour recevoir les bras du tripode étant ménagées à l'intérieur du fourreau ; et
- les moyens de libération des moyens d'accouplement comportent une zone affaiblie ménagée sur l'arbre à l'intérieur du fourreau.

L'invention sera mieux comprise à la lecture de la description qui va suivre, donnée uniquement à titre d'exemple et faite en se référant aux dessins sur lesquels :
- La figure 1 est une vue en coupe longitudinale d'un ensemble de transmission à mobilité axiale selon l'invention ;
- La figure 2 est un détail à plus grande échelle du palier et du roulement de l'ensemble de la figure 1 ;
- La figure 3 est une vue en coupe longitudinale du palier de guidage en translation de l'arbre;
- La figure 4 est une vue en coupe transversale de l'arbre reçu dans le palier ;
- La figure 5 est une vue en coupe longitudinale de l'arbre reçu dans le palier prise suivant la ligne V-V de la figure 4 ; et
- la figure 6 est une vue en élévation de l'arbre de l'ensemble de la figure 1 selon une variante de réalisation.

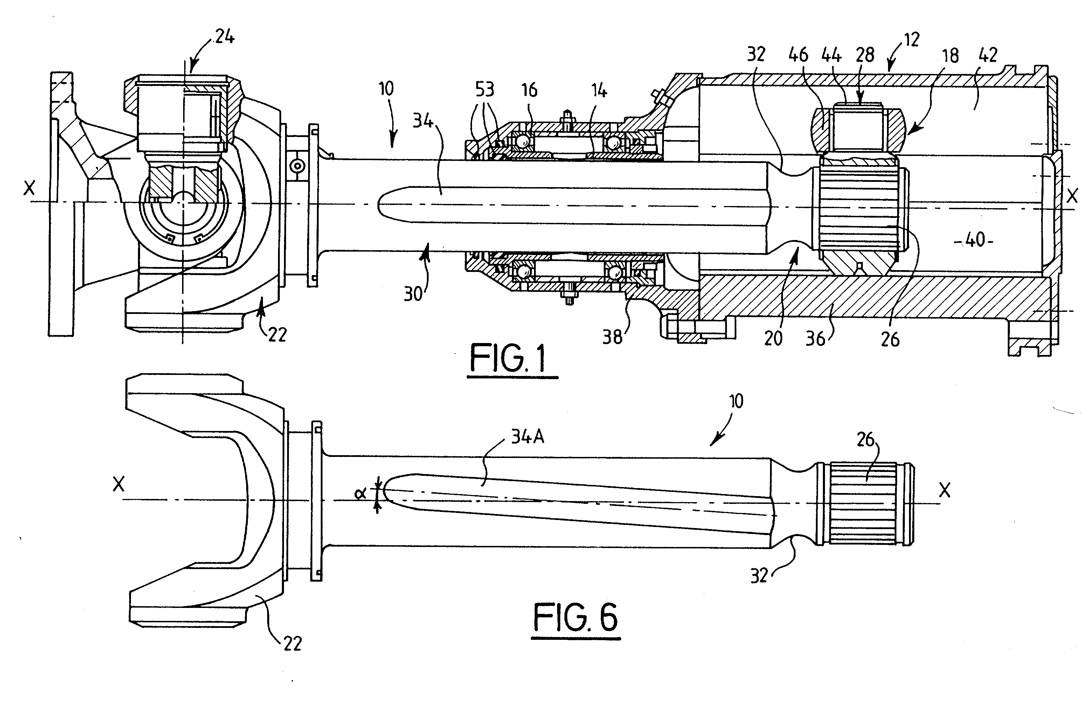

L'ensemble de transmission à mobilité axiale représenté sur la figure 1 est destiné à une transmission d'un véhicule moteur d'un train à grande vitesse.

Il comporte essentiellement un arbre menant 10 et un fourreau mené 12. Le fourreau 12 est muni d'un palier 14 de guidage en translation de l'arbre 10. Ce palier 14 est monté mobile en rotation par rapport au fourreau 12 par l'intermédiaire de deux roulements à billes 16. Le palier 14 est fixe axialement par rapport au fourreau 12.

L'arbre 10 et le fourreau 12 ont un même axe longitudinal noté X-X.

L'arbre et le fourreau sont munis de moyens 18 d'accouplement en rotation à mobilité axiale dans le prolongement du palier 14. Par ailleurs, l'arbre 10 porte des moyens 20 de libération des moyens 18 d'accouplement en rotation.

Sur la figure 1, l'arbre 10 présente à une extrémité une fourche de cardan 22. Cette dernière est intégrée à joint de cardan 24 destiné à relier l'arbre 10 à un arbre de sortie d'un moteur non représenté.

L'arbre 10 présente à son autre extrémité une portion cannelée 26 à laquelle sont reliés les moyens d'accouplement en rotation 18.

L'arbre 10 présente, entre la fourche 22 et la portion d'extrémité cannelée 26, un tronçon 30 de révolution à paroi latérale essentiellement cylindrique. Les moyens de libération 20 des moyens d'accouplement en rotation comportent une zone affaiblie ménagée sur le tronçon 30 au voisinage immédiat de la portion cannelée 26. Cette zone affaiblie est formée par exemple par une gorge périphérique 32, réduisant localement la section de l'arbre 10.

Trois méplats 34, régulièrement répartis autour de l'arbre, sont ménagés sur l'essentiel de la longueur du tronçon cylindrique 30. Ils s'étendent longidutinalement parallèlement à l'axe X-X de l'arbre 10.

Le fourreau 12 comporte un corps 36 dont une extrémité est destinée à être solidarisée à des moyens d'entraînement d'une roue d'un véhicule ferroviaire et dont l'autre extrémité, par laquelle pénètre l'arbre 10, porte un support 38 pour le palier 14 et le roulement 16 dans lequel ils sont immobilisés axialement. Le support 38 est également appelé prolonge.

Le corps de fourreau 36 présente une forme extérieure cylindrique et comporte intérieurement un passage axial 40 pour l'arbre 10.

Les moyens 18 d'accouplement en rotation de l'arbre et du fourreau comportent intérieurement sur le corps 36 du fourreau trois rainures longitudinales 42 débouchant dans le passage 40. Ils comportent en outre un tripode 44, fixé sur la portion cannelée 26 de l'arbre 10. Des galets 46 sont montés rotatifs sur les bras du tripode et sont reçus mobiles à roulement dans les rainures 42 formant des chemins de roulement longitudinaux. Ainsi, les moyens d'accouplement 28, formés du tripode 44 et des rainures 42, assurent un accouplement en rotation à mobilité axiale.

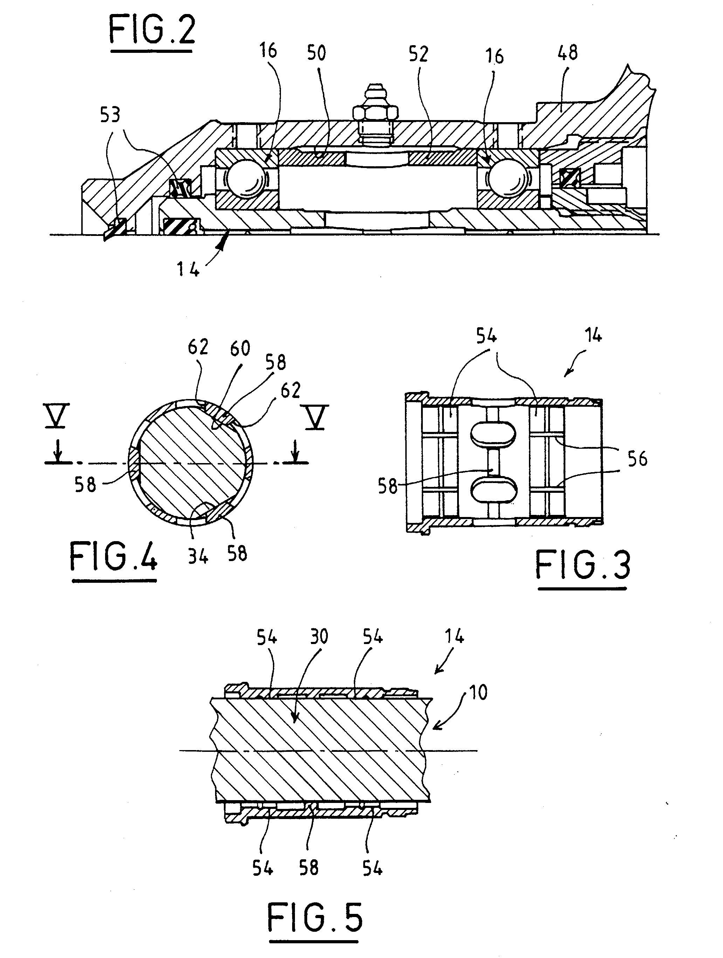

La prolonge 38 est représentée partiellement à plus grande échelle sur la figure 2.

Elle comporte un corps évidé 48 généralement de révolution adapté pour être boulonné à l'extrémité du corps 36. Elle supporte intérieurement le palier 14 par l'intermédiaire des roulements 16, lesquels sont reçus dans un chambrage 50 de la prolonge.

Chaque roulement comporte une simple rangée de billes maintenue entre des bagues extérieure et intérieure indépendantes. Ces roulements sont séparés axialement dans le chambrage 50 par une entretoise 52. Le palier 14 est supporté dans le chambrage 50 par les bagues intérieures des roulements 16. Par ailleurs, des joints d'étanchéité 53 sont prévus entre le corps 48 et d'une part le palier 14 et d'autre part l'arbre 10. Un autre joint 53 est prévu entre le palier 14 et l'arbre 10.

Ce palier 14, représenté en section sur la figure 3, est formé d'un seul tenant et a la forme générale d'un manchon. Il est réalisé par exemple en bronze et présente sur sa surface latérale intérieure deux portées identiques 54. Ces portées, dont la surface latérale intérieure présente des rainures longitudinales et circulaires 56, assurent un guidage en translation de l'arbre 10. Elles sont écartées axialement le long de l'axe X-X et s'étendent, après montage du palier, à l'aplomb des roulements 16.

Trois saillies 58, visibles sur la figure 4, sont prévues sensiblement en position médiane entre les portées 54. Elles sont régulièrement réparties angulairement sur une même périphérie du manchon et font saillie à l'intérieur du passage cylindrique défini par les portées 54. Ces trois saillies sont formées par des pions à face plane 60 et à parois latérales inclinées 62. La hauteur des pions 58, faisant saillie à l'intérieur du passage délimité par les deux portées 54 est telle que ces saillies puissent être reçues dans l'espace délimité par les méplats 34, comme cela est représenté sur la figure 4.

Ainsi, dans l'état normal de fonctionnement de l'ensemble de transmission, le tronçon cylindrique 30 de l'arbre 10 est guidé en translation par les portées 54 du palier 14, comme cela est visible sur la partie supérieure de la figure 5.

Au niveau des méplats 34, l'arbre 10 n'entre pas en contact avec les portées 54 alors que les surfaces planes 60 des pions 58 glissent sur la surface plane des méplats 54 avec un jeu fonctionnel non nul, afin de ne pas entraver le coulissement de l'arbre 10. La position relative du palier 14 et de l'arbre 10 au niveau des méplats 34 est visible sur la moitié inférieure de la figure 5.

Dans les conditions normales de fonctionnement, l'ensemble de transmission assure une solidarisation en rotation de l'arbre 10 et du fourreau 12, afin de transmettre un couple du moteur vers les roues du véhicule ferroviaire. L'arbre 10 est libre de coulisser dans le palier 14, de sorte que l'ensemble de transmission possède une mobilité axiale apte notamment à compenser les variations de longueur de la transmission dues aux débattements de l'essieu portant les roues par rapport au moteur. Lorsque l'arbre 10 se déplace par rapport au fourreau 12, le tripode 44 se déplace axialement à l'intérieur du corps 36, le couple étant transmis par l'intermédiaire des bras du tripode portant les galets 46 qui roulent à l'intérieur des rainures 42.

Lorsque le véhicule ferroviaire connaît un incident, et notamment un blocage du moteur d'entraînement, l'arbre 10 est soudainement stoppé en rotation. La roue du véhicule ferroviaire, soumise à son inertie et à l'avancement du véhicule ferroviaire, continue de tourner entraînant avec elle le fourreau 12. Des efforts importants prennent naissance au niveau de l'arbre 10 et du fourreau 12. Les efforts de cisaillement, provoquent la rupture de l'arbre 10 au niveau de la gorge périphérique 20. Ainsi, les moyens 18 d'accouplement en rotation de l'arbre et du fourreau sont libérés.

Le fourreau 12 tourne alors librement par rapport à l'arbre 10. Les surfaces planes 60 des pions 58 viennent en butée contre les méplats 34, assurant ainsi la solidarisation en rotation de l'arbre 10 et du palier 14. Les moyens de solidarisation en rotation ainsi formés permettent d'as-surer que le mouvement de rotation du fourreau 12 par rapport à l'arbre 10 s'effectue au niveau des seuls roulements 16, le palier 14 et l'arbre 10 étant tout deux immobiles.

Le palier 14 étant fixe en rotation par rapport à l'arbre 10, aucun échauffement ne prend naissance au niveau de l'arbre et du palier. Les roulements 16, dimensionnés pour autoriser une vitesse de rotation élevée entre le palier 14 et le fourreau 12, permettent aux trains à grande vitesse de continuer à circuler à vitesse normale malgré l'incident intervenu.

Même après libération des moyens de solidarisation, le mouvement axial entre l'arbre 10 et le palier 14 est possible, le contact entre les pions 58 et les méplats 34 ne s'opposant pas à un tel déplacement relatif.

Suivant une variante de réalisation représentée sur la figure 6, l'arbre 10 présente des méplats 34A ayant une forme d'hélice. Ainsi, l'axe longitudinal de chaque méplat 34A délimite avec l'axe X-X un même angle a.

On comprend que de tels méplats en coopération avec les pions 58 assurent comme précédemment, après rupture de l'arbre 10 à l'endroit de la gorge 32, une solidarisation en rotation de l'arbre 10 et du palier 14.

Cependant, avant la libération des moyens d'accouplement en rotation par rupture de la zone affaiblie, alors que l'arbre 10 et le fourreau 12 sont accouplés, les méplats en hélice 34A, forment des surfaces de came pour les pions 58. Ainsi, un déplacement axial de l'arbre 10 par rapport au fourreau 12 provoque un déplacement angulaire au niveau des roulements 16 entre le palier 14 et le fourreau 12.

En fonctionnement normal de la transmission, l'ensemble de transmission subissant en permanence des mouvements axiaux dus aux débattements de la suspension du véhicule, les méplats en hélice 34A induisent par effet de came un mouvement oscillatoire au niveau des roulements 16, de sorte que les organes mobiles des roulements sont continuellement en mouvement par rapport aux bagues intérieure et extérieure des roulements. Ce mouvement évite ainsi un brinellage des bagues des roulements. Toute altération des chemins de roulement par les éléments mobiles due à des sollicitations répétées localisées en des mêmes points est ainsi écartée.

## Revendications

1. Ensemble de transmission à mobilité axiale, du type comportant un arbre de transmission (10) généralement de révolution, reçu mobile à coulissement à l'intérieur d'un fourreau (12) muni d'un palier (14) de guidage en translation de l'arbre (10), lequel palier (14) est fixe axialement par rapport au fourreau (12) et est monté mobile en rotation par rapport à celui-ci par l'intermédiaire d'un roulement (16), l'arbre (10) et le fourreau (12) étant munis de moyens (18) d'accouplement en rotation à mobilité axiale dans le prolongement du palier (14), l'arbre (10) ou le fourreau (12) comportant en outre des moyens (20) de libération des moyens d'accouplement en rotation (18), de sorte que, après libération desdits moyens d'accouplement (18), l'arbre (10) est libre en rotation par rapport au fourreau (12), caractérisé en ce que l'arbre (10) et le palier (14) comportent des moyens (34, 58 ; 34A, 58) de solidarisation en rotation l'un à l'autre.

2. Ensemble selon la revendication 1, caractérisé en ce que les moyens de solidarisation en rotation comportent au moins un méplat (34 ; 34A) ménagé sur la paroi latérale de l'arbre (10) et le palier (14) comporte une ou plusieurs saillies (58) coopérant avec le ou chaque méplat (34 ; 34A) pour assurer la solidarisation en rotation de l'arbre (10) avec le palier (14).

3. Ensemble selon la revendication 2, caractérisé en ce que le ou chaque méplat (34A) a sensiblement une forme d'hélice, de sorte qu'il forme une surface de came pour la ou chaque saillie (58), provoquant ainsi un déplacement angulaire au niveau du roulement (16) entre le palier (14) et le fourreau (12) lors d'un déplacement axial de l'arbre (10) par rapport au fourreau (12).

4. Ensemble selon l'une quelconque des revendications précédentes, caractérisé en ce que les moyens (18) d'accouplement en rotation comportent un tripode (28) fixé à l'extrémité de l'arbre (10) et reçu dans le fourreau (12), des rainures (42) longitudinales complémentaires adaptées pour recevoir les bras du tripode étant ménagées à l'intérieur du fourreau (12).

5. Ensemble selon l'une quelconque des revendications précédentes, caractérisé en ce que les moyens (20) de libération des moyens d'accouplement comportent une zone affaiblie ménagée sur l'arbre (10) à l'intérieur du fourreau (12).
